# DEMANDE DE BREVET EUROPEEN

(11) **EP 2 489 601 A1**
(43) Date de publication de la demande: **22.08.2012**
(21) Numéro de dépôt: 11305163.5
(22) Date de dépôt: 16.02.2011
(51) Int. Cl.: B65D 35/10, B65D 47/20, B29C 45/00

(54) **Tête de tube munie d'une valve anti retour d'air**

(71) Demandeur: Albéa Services, 92230 Gennevilliers (FR)
(72) Inventeur: Massey, Jean-Manuel, 51360, Prunay (FR); Kerman, Eric, 51000, CHALON EN CHAMPAGNE (FR); Thorne, Nick, 38180, SEYSSINS (FR)
(74) Mandataire: Callon de Lamarck, Jean-Robert

(57) **Abrégé**

La présente invention concerne une tête de tube pour produit de consistance fluide à pâteuse comprenant
- un goulot (2) présentant à une première extrémité une ouverture par laquelle le produit est extrait du tube,
- un épaulement (3) relié à une seconde extrémité du goulot (2) opposée à la première extrémité, et
la tête de tube comprenant un moyen anti-retour (4) d'air disposé dans ledit goulot (2), ledit moyen étant adapté pour éviter un retour d'air de la première extrémité du goulot vers la seconde extrémité du goulot, caractérisé en ce que le tête de tube est monobloc et en ce que le moyen anti-retour (4) comprend au moins un clapet.

## Description

### DOMAINE TECHNIQUE GENERAL

L'invention se rapporte à une tête de tube pour produit de consistance fluide à pâteuse, et en particulier à une tête de tube comprenant un système anti-retour d'air.

### ETAT DE L'ART

Un tube peut contenir un produit de consistance fluide à pâteuse réactif au contact de l'air (dentifrice, fond de teint, crème solaire, adhésif, peinture, médicament...). En effet, certains produits peuvent subir une oxydation au contact de l'air et perdre ainsi leurs propriétés chimiques.

La mise en contact de l'air et du produit intervient une fois que l'opercule de protection au niveau de l'ouverture de la tête du tube est enlevé. Lors d'une utilisation du produit, l'utilisateur presse la jupe du tube afin d'expulser le produit hors du tube via l'ouverture de la tête. Cette ouverture est formée à l'extrémité d'un goulot constituant la tête avec un épaulement s'évasant en partant du goulot. Ainsi, le produit est présent à l'intérieur du goulot au moment où l'utilisateur diminue la pression exercée sur le tube.

Lorsque l'utilisateur a extrait suffisamment de produit du tube pour une utilisation et relâche la jupe, la pression exercée sur la jupe du tube diminue. Généralement, les propriétés physiques de la jupe du tube ont un caractère plus ou moins élastique, ce qui implique que la jupe reprend, au moins en partie, sa forme initiale (forme avant l'application de la pression par l'utilisateur) et provoque un retour du produit contenu dans la tête.

Si ce retour élastique de la jupe est faible, une partie du produit à l'intérieur du goulot est aspiré vers l'épaulement. La partie du produit restante à l'intérieur du goulot assure une obturation du goulot vis-à-vis de l'air extérieur. Le goulot présentant un volume interne relativement faible, de l'ordre de quelques mm³, par rapport au volume interne de l'épaulement ou de la jupe, ceci implique qu'une très faible quantité d'air extérieur est présente dans le tube au niveau du goulot et qu'une très faible quantité de produit est en contact avec l'air.

Cependant, si ce retour élastique est important, la totalité du produit présent dans le goulot peut retourner vers l'épaulement jusqu'à ce que le goulot soit complètement vide. En conséquence, le goulot tout entier ainsi qu'une portion de l'épaulement, voire la totalité de l'épaulement, reçoit de l'air extérieur par aspiration, ce qui augmente considérablement le volume d'air logé à l'intérieur du tube et accroit fortement les risques précédemment évoqués d'oxydation du produit contenu dans le tube

Si le bouchon du tube est ensuite refermé, l'oxygène de l'air aspiré dans le tube après son utilisation va pouvoir réagir avec le produit contenu dans le tube, et ceci jusqu'à l'utilisation suivante, potentiellement quelques heures, jours ou même semaines plus tard. En outre, si le produit doit être appliqué sur la peau d'un utilisateur, un risque de contamination bactérienne du produit existe du fait du contact du produit avec l'air extérieur aspiré.

Cette situation est évitée en disposant un système anti-retour d'air à l'intérieur du tube. Un tel système évite un retour d'air à l'intérieur du tube. Un exemple de tel système est illustré par le document WO03/016159.

Ce document présente en effet une tête de tube, comprenant un goulot et un épaulement s'étendant du goulot. Afin d'éviter un retour d'air à l'intérieur du tube, un insert comprenant une valve et des moyens de mise en pression de cette valve est disposé dans le goulot.

Le problème d'un tel système est sa complexité structurelle et d'industrialisation ainsi que son coût. A cet égard, un tel système comporte plusieurs éléments distincts les uns des autres qui doivent être montés ensemble. D'une part, chaque élément est fabriqué séparément, ce qui augmente le coût total du système. Ensuite, le montage des éléments entre eux est particulièrement difficile étant donné qu'il se situe dans la tête du tube, la tête ne disposant que de très peu d'espace, de l'ordre du millimètre, pour loger ce système. D'autre part, disposer ce système à l'intérieur de la tête nécessite une grande précision de fabrication étant donné qu'une certaine étanchéité doit être respectée pour éviter ce retour d'air. Cette précision engendre également un coût de production.

### PRESENTATION DE L'INVENTION

L'invention vise à présenter une tête de tube ne présentant pas ces inconvénients.

L'invention propose ainsi une tête de tube pour produit de consistance fluide à pâteuse comprenant
- un goulot présentant à une première extrémité une ouverture par laquelle le produit est extrait du tube,
- un épaulement relié à une seconde extrémité du goulot opposée à la première extrémité, et la tête de tube comprenant un moyen anti-retour d'air disposé dans ledit goulot, ledit moyen étant adapté pour éviter un retour d'air de la première extrémité du goulot la seconde extrémité du goulot, caractérisé en ce que le tête de tube est monobloc et en ce que le moyen anti-retour comprend au moins un clapet.

Selon plusieurs variantes, la tête de tube peut comprendre un ou plusieurs des caractéristiques suivantes, prises indépendamment ou en combinaison :
- le clapet anti-retour est disposé au niveau de la seconde extrémité du goulot ;
- le clapet anti-retour est disposé à une position intermédiaire entre la première et la seconde extrémité du goulot, de sorte que pour un clapet ayant une dimension maximale D, la distance entre ledit clapet et la première extrémité du goulot soit supérieure ou égale à D ;
- le clapet est disposé dans un plan sensiblement perpendiculaire à l'axe du goulot ;
- la tête de tube comprend une charnière reliant le clapet anti-retour à une face interne du goulot par la charnière de sorte que le clapet est mobile en rotation ;
- le goulot comprend une face interne de forme sensiblement cylindrique, présentant une lèvre à laquelle est relié ledit clapet anti-retour ;
- le moyen anti-retour est formé de plusieurs clapets, l'ensemble desdits clapets étant adapté pour obturer un canal du goulot, lesdits clapets étant typiquement identiques ;
- la tête de tube est réalisée en matière plastique, tel que du polyéthylène ou du polypropylène.

L'invention concerne également un tube comprenant une telle tête de tube.

Selon un mode de réalisation particulier, le tube comprend une jupe réalisée en au moins un matériau plastique, la jupe présentant typiquement au moins l'une des propriétés suivantes :
- une épaisseur comprise entre 150 et 250 µm ; plus précisément comprise entre 225 et 235 µm ; typiquement de l'ordre de 230 µm ;
- un diamètre compris entre 1 et 8 cm ; par exemple entre 2 et 5 cm ;
- une longueur comprise entre 5 et 20 cm, par exemple entre 8 et 16 cm, typiquement de l'ordre de 15 cm.

L'invention concerne également un procédé de fabrication d'une tête de tube, ledit procédé comprenant les étapes suivantes :
- une étape d'injection de la tête de tube, de manière à former un goulot présentant une ouverture à une première extrémité, un épaulement relié à une seconde extrémité du goulot opposée à la première extrémité, et une membrane disposée dans ledit goulot, de manière à l'obstruer, la tête de tube étant monolithique,
- une étape de poinçonnage de ladite membrane, de manière à découper ladite membrane afin de former au moins un clapet disposé à l'intérieur du goulot.

Selon un mode de réalisation particulier, l'étape de poinçonnage est réalisée par application d'un poinçon sur ladite membrane, de manière à former le clapet et une charnière reliant le clapet au goulot.

Selon une variante de ce procédé, le goulot et l'épaulement sont réalisé dans une première matière plastique, le moyen anti retour d'air étant formé par moulage injection dans une seconde matière plastique distincte de la première matière plastique.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- les figures 1, 2 et 3 présentent plusieurs vues d'une tête de tube selon un mode de réalisation de l'invention ;
- les figures 4, 5 et 6 présentent des vues d'un autre mode de réalisation de la tête de tube ;
- la figure 7 illustre une variante de ce mode de réalisation ;
- la figure 8 illustre une vue en coupe de la tête de tube présentée précédemment sur les figures 1 à 3, sur laquelle est disposé un bouchon;
- les figures 9a à 9f présentent plusieurs exemples de poinçons utilisés pour la réalisation de la tête de tube ;
- la figure 10 illustre un exemple de mise en forme du moyen anti retour d'air au moyen d'un poinçon ;
- la figure 11 illustre une autre variante de la tête de tube, dans laquelle le goulot comprend une double paroi.

Dans l'ensemble des figures, on repère par des références identiques les éléments identiques ou similaires.

### DESCRIPTION DETAILLEE

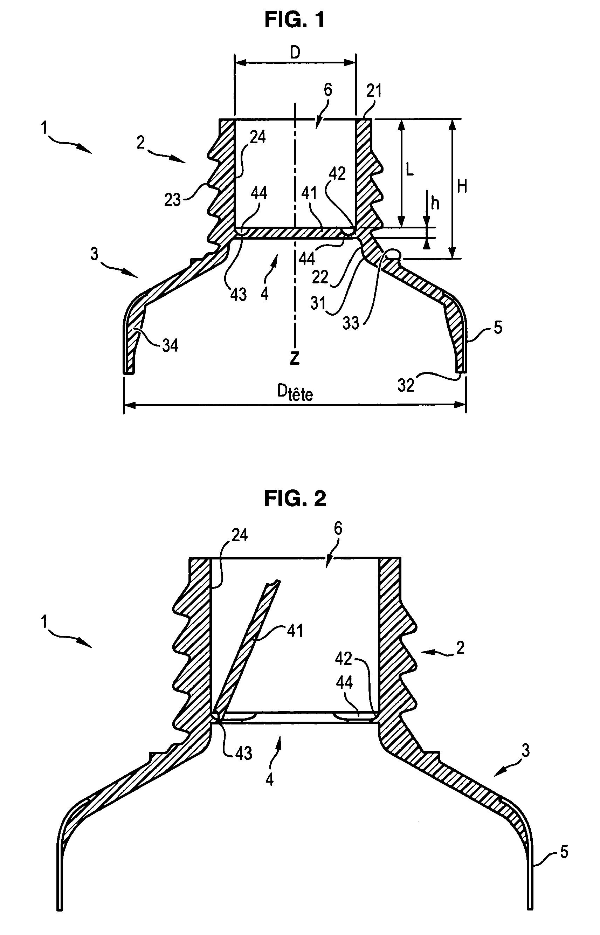

Les figures 1, 2 et 3 présentent plusieurs vues d'une tête de tube selon un mode de réalisation de l'invention.

La tête 1 comprend :
- un goulot 2,
- un épaulement 3, et
- un moyen anti retour 4.

La tête de tube 1 est reliée à un corps une jupe 5, dont on représente une partie reliée à une extrémité de l'épaulement 3.

Le corps de tube 5 délimite un ou plusieurs réservoirs de produits.

Le goulot 2 comprend une première extrémité 21 munie d'une ouverture 6 définie par une face interne 24 du goulot 2, et une seconde extrémité 22 opposée à ladite première extrémité 21, au niveau de laquelle le goulot 2 est relié à l'épaulement 3.

Le goulot 2 est conventionnellement sensiblement cylindrique, elliptique ou conique autour d'un axe Z, de manière à permettre la fermeture de l'ouverture 6 via un bouchon non représenté, qui est vissé sur un filetage externe 23 du goulot 2. L'axe Z correspond à un axe de symétrie de la face interne 24 du goulot 2.

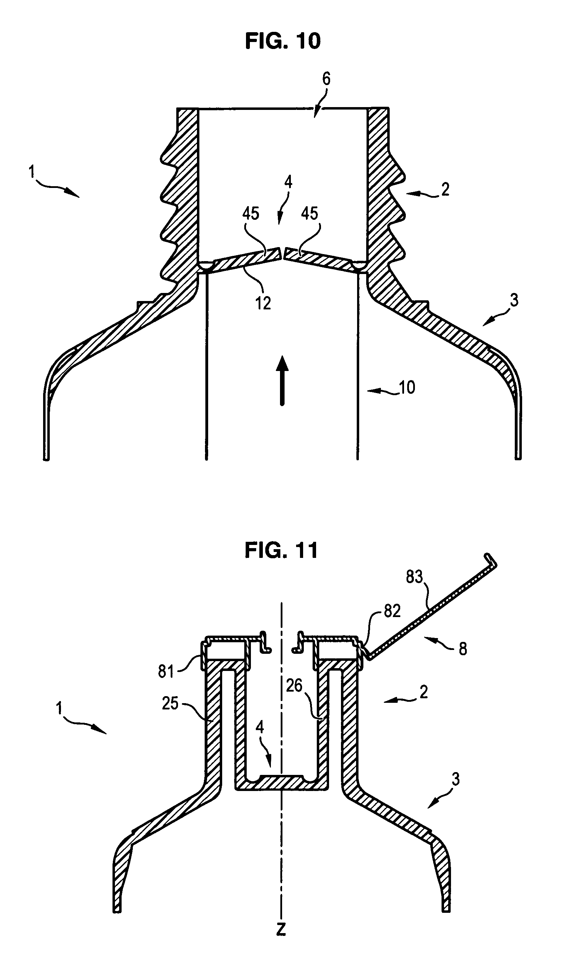

D'autres modes de réalisation sont envisageables notamment des modes de réalisation dans lesquels la tête de tube 1 comprend un bouchon communément appelé « flip-top » muni d'un couvercle pivotant. Le bouchon est alors typiquement vissé, collé, soudé ou monté en force sur la tête de tube 1, dans une position orienté de manière adaptée en fonction de la forme du tube et d'éventuelles inscriptions qui y sont portées. La figure 11 qui sera présentée ultérieurement illustre ce mode de réalisation.

Tel que représenté sur la figure 1, la première extrémité 21 du goulot 2 est sensiblement plane, de manière à permettre de réaliser une liaison étanche entre le goulot 2 et un bouchon vissé sur ledit goulot 2.

En variante, un joint d'étanchéité peut être disposé sur ladite première extrémité 21 du goulot.

L'épaulement 3 tel qu'illustré s'étend à partir de la seconde extrémité 22 du goulot 2, et est évasé d'une extrémité de liaison 31 de l'épaulement 3 vers une extrémité libre 32 de l'épaulement 3.

En variante, l'épaulement 3 est sensiblement plan. L'épaulement 3 s'étend par exemple à partir de la seconde extrémité 22 du goulot 2 dans un plan perpendiculaire à l'axe Z du goulot 2.

Dans le mode de réalisation illustré, l'épaulement 3 comprend une butée 33 disposée à proximité de son extrémité de goulot 31, ladite butée 33 permettant de réalisée une butée lorsqu'un bouchon est vissé sur le goulot 2.

Cette butée 33 permet ainsi de renforcer la zone de l'épaulement 3 sur laquelle est susceptible de venir exercer un effort lors du vissage sur le goulot.

La butée 33 a typiquement un profil comprenant une ou plusieurs lèvres circulaires, ou est composée de plusieurs portions de cercle centrées sur l'axe Z du goulot 2.

L'épaulement 3 comprend typiquement une section renforcée 34 au niveau de la liaison entre la tête de tube 1 et la jupe 5, prenant la forme d'une section d'épaisseur sensiblement augmentée dans le mode de réalisation représenté sur la figure 1.

Le moyen anti retour 4 tel que représenté est un clapet anti retour d'air disposé à l'intérieur du goulot 2.

Dans le mode de réalisation représenté, le moyen 4 est disposée dans un plan sensiblement perpendiculaire à l'axe Z du goulot 2, et est adaptée pour permettre d'obturer sensiblement entièrement le canal formé dans le goulot 2 délimité par sa face interne, et se terminant par l'ouverture 6.

Le moyen anti retour d'air 4 comprend au moins un clapet 41 qui est typiquement reliée à la face interne du goulot 2 via une lèvre 42 s'étendant sur toute la périphérie du goulot 2.

Le moyen anti retour d'air 4 est avantageusement relié à cette lèvre 42 via une charnière 43, réalisée par un pont de matière entre la lèvre 42 et le clapet 41.

Le moyen anti retour d'air 4 comprend en outre une gorge circulaire 44 au niveau de la liaison entre la lèvre 42 et le clapet 41.

Comme cela sera expliqué par la suite, le clapet 41 est typiquement formé par la découpe d'une membrane disposée à l'intérieur du goulot 2 à l'aide d'un poinçon, ou formé directement lors de la fabrication de la tête de tube 1.

On repère sur la figure 1 les valeurs suivantes :
- D : correspond au diamètre de l'ouverture 6, c'est-à-dire au diamètre interne du goulot 2 ;
- H ; correspond à la hauteur du goulot 2, c'est-à-dire la distance entre la première extrémité 21 et la seconde extrémité 22 ;
- Dtête ; correspond au diamètre maximum de la tête de tube 1, c'est-à-dire le diamètre de la tête de tube au niveau de sa liaison avec le corps de tube 5 ;
- h ; correspond à l'épaisseur du moyen anti retour d'air 4 ;
- L ; correspond à la distance entre la première extrémité 21 du goulot 2 et le moyen anti retour d'air 4.

Dans des modes de réalisation particuliers, la tête 1 a des mesures comprises dans les plages de valeurs suivantes :
- D est compris entre 5 et 10 mm ; typiquement de l'ordre de 5,66 mm ou 9,1 mm ;
- H est compris entre 5 et 10mm, typiquement entre 8 et 10mm ;
- Dtête est compris entre 20 et 30 mm ; typiquement de l'ordre de 25 ou 30 mm ;
- h est compris entre 0,5 et 1,5 mm ; typiquement de l'ordre d 0,75 ou 1 mm ;
- L est compris entre 6 et 12 mm ; typiquement de l'ordre de 8mm.

La figure 2 illustre la tête de tube 1 présentée précédemment dans une configuration dans laquelle le clapet 41 est ouvert.

La liaison entre le clapet 41 et la lèvre 42 est réalisée au moyen de la charnière 43.

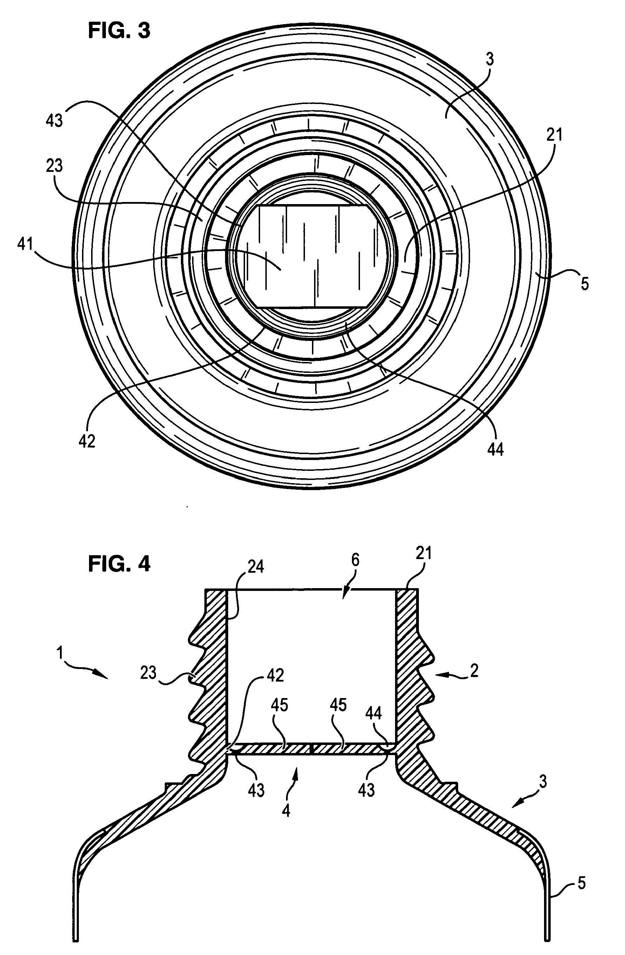

La figure 3 présente une vue de dessus de la tête de tube 1, et illustre ainsi la forme du clapet 41 selon un mode de réalisation particulier de l'invention.

Le clapet 41 a ici une forme de disque tronqué ou de rectangle présentant deux côtés opposés arrondis. La charnière 43 est avantageusement disposée au niveau de l'une de ces extrémités arrondies du clapet 41, les côtés tronqués permettant au clapet de ne pas buter sur la face interne 24 du goulot 2 lorsqu'il se déplace en position ouverte comme illustré sur la figure 2.

La charnière 43 peut s'étendre sur tout ou partie d'un des côtés arrondis du clapet 41, en fonction des propriétés mécaniques du matériau dont est constitué la tête de tube 1. Une découpe est réalisée afin de séparer la lèvre 42 du clapet 41, sauf au niveau de la charnière 43 qui est ainsi composée d'un pont de matière entre le clapet 41 et la lèvre 42.

Tel qu'illustré sur la figure 3, la découpe est réalisée sensiblement dans la partie centrale de la gorge 44, c'est-à-dire à la zone d'épaisseur minimale de la valve 4. La charnière est donc également située au niveau de cette zone d'épaisseur minimale, ce qui permet de diminuer la force nécessaire pour ouvrir le clapet 41.

En outre, la découpe est ainsi légèrement espacée de la face interne 24 du goulot 2, ce qui est avantageux pour l'usinage de la découpe.

On remarque que la lèvre 42 crée un décalage ; ce qui permet au clapet 41 de se déplacer en position ouverte sans que son mouvement ne soit gêné par la face interne 24 du goulot 2.

Les figures 4, 5 et 6 présentent des vues d'un autre mode de réalisation de la tête de tube, dans lequel le moyen anti retour d'air 4 comprend plusieurs clapets 45, chacun de ces clapets ayant ici une forme de portion de disque.

Seules les différences avec le mode de réalisation présenté sur les figures 1 à 3 seront ici décrites, les éléments en communs étant repérés par les mêmes références numériques.

Dans ce mode de réalisation, le moyen anti retour d'air 4 comprend plusieurs clapets 45, chacun de ces clapets 45 étant reliée individuellement à la lèvre 42 au moyen d'une charnière 43.

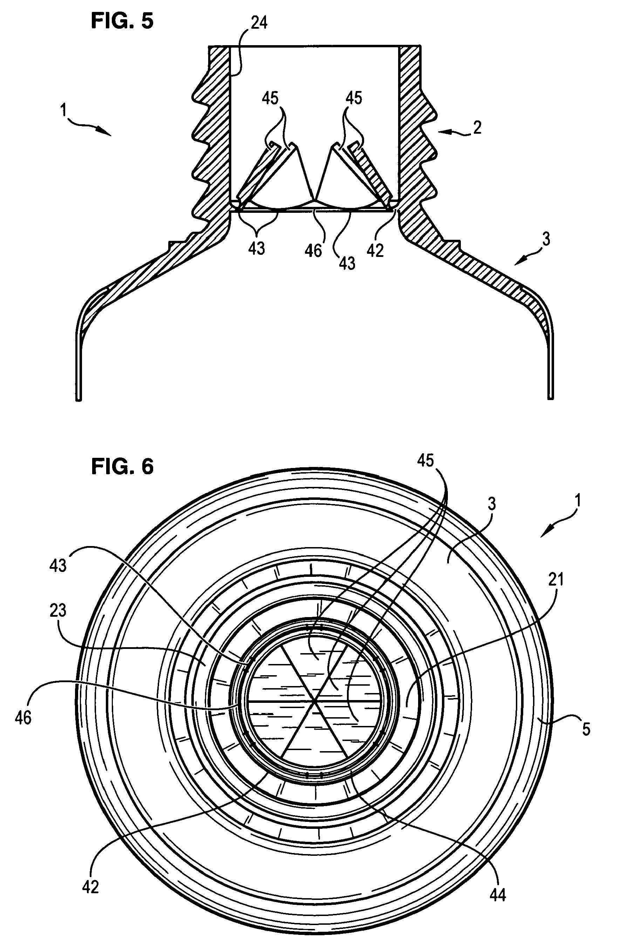

La figure 4 présente le moyen anti retour d'air 4 en position fermée, tandis que la figure 5 présente le moyen anti retour d'air 4 en position ouverte.

La figure 5 illustre plus précisément les clapets 45 dans une position où ils permettent un passage important de produit au travers du goulot 2, et sont inclinés d'un angle important par rapport à leur position fermée.

Cette forte inclinaison des clapets 45 est ici possible en raison des dimensions de la charnière 43, qui ne s'étend que sur une partie du bord arrondi 46 des clapets 45. Les charnières 43 telles que représentées ont donc une résistance relativement faible, et permettent une ouverture importante des clapets 45 lorsque l'utilisateur exerce une pression sur la jupe 5 du tube.

La figure 6 présente une vue de dessus de la tête de tube 1, et illustre ainsi la disposition des clapets 45, qui ont ici la forme de portions de disques reliées à la lèvre 42 par une charnière 43 disposée au niveau de leur bord arrondi 46.

Les charnières 43 peuvent s'étendre sur tout ou partie du bord des clapets adjacent à la lèvre 42, l'étendue de la charnière définissant sa résistance à la déformation plastique comme explicité précédemment ; elle est typiquement définie en fonction du matériau dont est formée la tête de tube 1.

Dans le mode de réalisation illustré sur la figure 6, le moyen anti retour d'air 4 comprend six clapets 45, chacun de ces clapets 45 correspondant à une portion de disque d'environs 60° de manière à ce que l'ensemble de ces clapets 45 obstrue le canal du goulot 2. Tel qu'illustré, chacune des parties de clapets 45 est reliée à la lèvre 42 par une charnière 43 s'étendant sur toute la partie arrondie des clapets 45.

Les clapets 45 sont typiquement identiques.

Les charnières 43 peuvent être modifiées, afin de s'étendre sur tout ou partie de la partie arrondie des clapets 45, les dimensions des charnières étant typiquement déterminées en fonction du matériau dont est réalisé la tête de tube 1, et notamment de ses propriétés élastiques.

Lors de l'utilisation du tube, l'utilisateur compresse la jupe 5 du tube afin d'en extraire le produit qu'il contient.

Le produit présent dans la jupe 5 du tube est alors dirigé vers la tête de tube 1, et exerce un effort sur le moyen anti retour d'air 4.

Sous l'effort exercé par la poussée du produit, le clapet 41 du moyen anti retour d'air 4 ou dans le mode de réalisation illustré les clapets 45 sont entrainés en rotation via la charnière 43 : le clapet 41 se déplace alors en rotation, son extrémité opposée à la charnière allant en direction de l'ouverture 6, et permet ainsi au produit de sortir du tube par l'ouverture 6 du goulot 2 au travers du moyen anti retour d'air 4. Lorsque l'utilisateur cesse d'exercer un effort de compression sur la jupe 5 du tube, celui-ci réalise un retour élastique vers sa forme initiale, ce retour élastique étant plus ou moins important en fonction du matériau dont la jupe 5 du tube est constituée.

La jupe 5 du tube est par exemple composée de tout ou partie des matériaux suivants : du polyéthylène notamment dans ses variantes haute, moyenne et basse densité, d'une feuille métallique.

On distingue notamment les modes de réalisation suivants :
- la jupe 5 est en polyéthylène, comprenant ou non une feuille métallique tel que de l'Aluminium, et la tête de tube 1 est en polyéthylène et le moyen anti retour d'air est également réalisé en polyéthylène ou surmoulé dans un autre matériau ;
- la jupe 5 est en polypropylène comprenant ou non une feuille métallique tel que de l'Aluminium et la tête de tube 1 est en polyéthylène et le moyen anti retour d'air est également réalisé en polypropylène ou surmoulé dans un autre matériau.

La jupe 5 a typiquement les dimensions suivantes :
- une épaisseur comprise entre 150 et 250 µm ; plus précisément entre 200 et 250 µm, par exemple comprise entre 225 et 235 µm ; typiquement de l'ordre de 230 µm ;
- un diamètre compris entre 1 et 8 cm ; par exemple entre 2 et 5 cm ;
- une longueur comprise entre 5 et 20 cm, par exemple entre 8 et 16 cm, typiquement de l'ordre de 10 à 12 cm.

Une jupe 5 présentant de telles caractéristiques présente un retour élastique faible après sa compression par l'utilisateur, et permet ainsi d'optimiser l'effet anti retour d'air en combinaison avec les moyens anti retour d'air 4.

Le polyéthylène haute densité (PEHD) est défini par une densité supérieure ou égale à 0,941 g/cm3. Le PEHD a un faible degré de ramification, et ainsi des forces intermoléculaires importantes, et une résistance à la traction élevée.

Le polyéthylène de densité moyenne (PEMD) est défini par une densité comprise entre 0,926 et 0,940 g/cm3.

Le polyéthylène linéaire à faible densité (PELBD) est défini par une densité comprise entre 0,915 et 0,925 g/cm3. Le PELBD est un polymère sensiblement linéaire, avec un nombre important de branches courtes, qui est habituellement réalisé par copolymérisation d'éthylène avec des alpha-oléines à chaine courte (par exemple 1-butène, 1-hexane ou 1-octène).

Le polyéthylène à faible densité (PEBD) est défini par une densité comprise entre 0,910 et 0,925 g/cm3. Le PEBD a un haut niveau de ramification des chaines courtes et longues, ce qui implique que les chaines ne sont pas bien contenues dans la structure cristalline, et résulte en une résistance à la traction plus faible et un matériau plus ductile.

Le polyéthylène très faible densité (PETBD) est défini par une densité comprise entre 0,880 et 0,915 g/cm³.

Les méthodes pour produire ces différents types de polyéthylène sont bien connues de l'état de l'art.

Ce retour élastique entraine un recul du produit se trouvant dans le goulot 2, qui est aspiré vers l'intérieur de la jupe 5 du tube.

La présence du moyen anti retour d'air 4 permet d'obturer le goulot 2 suite à l'utilisation du tube, et ainsi de permettre de préserver le produit qu'il contient des dégradations par l'environnement extérieur.

En effet, lors de l'aspiration du produit vers l'intérieur du tube, le clapet 41 ou les clapets 45 de la valve 4 se repositionne(nt) en position fermée, sous l'action du retour élastique de la charnière 43, et évite ainsi que de l'air ou des contaminants ne pénètrent dans le tube et contaminent le produit qu'il contient.

Le moyen anti retour d'air 4 est avantageusement positionné à l'intérieur du goulot 2 de manière à ce que lors du déplacement en rotation du clapet 41, celui-ci demeure entièrement dans le goulot 2 sans en sortir afin de ne pas gêner l'utilisateur. De manière plus générale, le moyen anti retour d'air 4 est avantageusement positionné de manière à ne pas venir en saillie de l'ouverture 6.

Ainsi, le moyen anti retour d'air 4 est avantageusement disposé dans le goulot 2 à une distance de sa première extrémité 21 supérieure ou égale à la dimension maximale du clapet 41 ou des clapets 45.

Les modes de réalisations comprenant plusieurs clapets 45 de dimensions réduites permettent ainsi de positionner le moyen anti retour d'air 4 plus près de la première extrémité 21 du goulot 2, dans la mesure où l'amplitude de déplacement de ces clapets 45 est plus petite que dans le cas d'un unique clapet 41 obturant le canal d'un goulot 2 de mêmes dimensions.

De plus, un nombre plus élevé de parties de clapet 45 permet de faciliter l'ouverture du clapet 41 et ainsi la sortie du produit sous l'action de l'utilisateur.

Plus particulièrement, dans le cas où la charnière 43 s'étend sur tout le bord des clapets 45 en contact avec la lèvre 42 ou l'intérieur du goulot 2, augmenter le nombre des parties de clapet 45 permet de réduire les dimensions et donc la résistance mécanique de la charnière, et ainsi d'en faciliter la déformation élastique pour permettre la sortie du produit du tube.

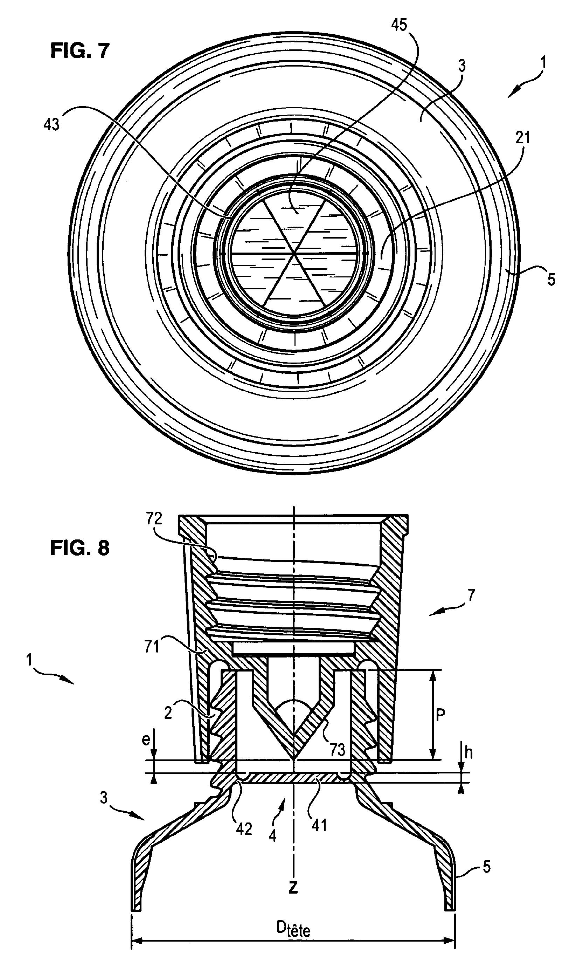

La figure 7 présente une variante de la tête de tube 1 présentée sur les figures 4, 5 et 6, dans laquelle les charnières 43 des clapets 45 s'étendent sur tout le bord arrondi des clapets 45.

Dans cette configuration particulière, les charnières 43 ont une résistance mécanique très supérieure à la configuration présentée sur les figures 4 à 6 dans laquelle les charnières 43 sont de dimensions réduites.

Plus la charnière 43 a des dimensions importantes, et notamment en termes de longueur le long du bord arrondi du ou des clapets 41 ou 45, plus elle présente une résistance mécanique importante, et donc moins le ou les clapets 41 ou 45 se déplaceront.

Dans le cas où la charnière 43 a une résistance mécanique faible, le ou les clapets 41 ou 45 pivotent facilement sous l'effet de la poussée de produit lorsque l'utilisateur exerce une pression sur la jupe 5 du tube. Dans le cas où la charnière 43 a une résistance mécanique importante, le ou les clapets 41 ou 45 pivotent très faiblement, et seule l'extrémité libre du ou des clapets 41 ou 45 se déplace alors afin de laisser passer le produit contenu dans le tube par le canal du goulot 2.

Selon une autre variante, le moyen anti retour d'air 4 comprend une membrane s'étendant sur toute la section interne du goulot 2, et munie d'une fente s'étendant selon un diamètre du goulot 2, ladite fente s'élargissant par déformation élastique du matériau afin de permettre le passage du produit lorsque l'utilisateur exerce une pression sur le tube, puis reprenant sa position initiale dans laquelle elle obture le goulot 2.

La figure 8 illustre une vue en coupe de la tête de tube 1 présentée précédemment sur les figures 1 à 3, sur laquelle est disposé un bouchon 7.

Le bouchon 7 comprend typiquement un corps sensiblement cylindrique ou conique 71, un taraudage 72 complémentaire au filetage 23 du goulot 2 et un embout perceur 73, agencés de sorte que le bouchon peut être vissé sur le goulot 2 lorsqu'il est amené sur le goulot 2 via une première extrémité, et de sorte que l'embout perceur 73 soit inséré dans le goulot 2 lorsque le bouchon 7 est amené sur le goulot 2 via une seconde extrémité opposée à ladite première extrémité.

Tel qu'illustré sur la figure 8, le bouchon 7 est disposé sur le goulot 2 de sorte que l'embout perceur 73 soit positionné à l'intérieur du goulot 2, une telle configuration étant typiquement utilisée lors de la première utilisation du tube afin de percer un opercule de conditionnement disposé sur l'extrémité du goulot 2 et l'obturant de manière hermétique afin de protéger le produit qu'il contient.

La figure 8 illustre le positionnement du moyen anti retour d'air 4 à l'intérieur du goulot 2 ; celle-ci est disposée à une distance de la première extrémité 21 du goulot 2 suffisante pour permettre que l'embout perceur 73 ne rentre pas en contact avec le moyen anti retour d'air 4 lorsque le bouchon 7 est ainsi positionné sur le goulot 2.

Ainsi, pour un embout perceur 73 ayant une hauteur P, le moyen anti retour d'air 4 est disposé à une distance P+e de la première extrémité 21 du goulot 2, où e est égal à l'écart minimum souhaité entre le moyen anti retour d'air 4 et l'embout perceur 73.

Dans des modes de réalisation particuliers, P est compris entre 5 et 8 mm, typiquement égal à 7,3 mm, et e est compris entre 0,5 et 2mm, typiquement égal à 0,5 ou 1,9 mm.

La tête de tube 1 et la jupe 5 du tube peuvent être formées selon plusieurs procédés.

La tête de tube 1 est typiquement réalisée par injection de matière plastique, par exemple en polyéthylène ou polypropylène. En variante, la tête de tube 1 peut également réalisée par un procédé de compression de matière.

La jupe 5 peut également être réalisée par extrusion de matière plastique (on parle alors de jupe plastique) ou par enroulement et soudage longitudinal d'un matériau multi-couche en polyéthylène, polypropylène ou mélange de polyéthylène et de polypropylène, ayant ou non une feuille de métal (on parle alors de jupe métallo-plastique). Une telle structure métallo-plastique correspond à une couche de matériau métallique tel que de l'aluminium, recouverte par une ou plusieurs couches de matériaux plastiques.

La tête de tube 1 est alors par exemple
- soit directement surmoulée sur la jupe 5, cette opération de surmoulage étant avantageusement réalisée directement après la formation de la jupe 5, par exemple sur un même site de production ou sur une même chaine de production ;
- soit formée indépendamment de la jupe 5, puis assemblé à la jupe 5, typiquement par soudage ou collage.

Lors de la fabrication de la tête de tube 1, le moyen anti retour d'air 4 et formé comme une membrane interne au goulot 2, qui est ensuite usinée afin de définir le clapet 41 et la charnière 43, par exemple par poinçonnage.

La tête de tube 1 est ainsi monolithique ; elle est formée en une seule pièce, et ne nécessite donc pas d'étapes additionnelles de mise en position des différents éléments les uns par rapport aux autres.

Le goulot 2, l'épaulement 3 et le moyen anti retour d'air 4 forment une unité monobloc. Le caractère monobloc, ou monolithique de la tête de tube 1 n'implique pas que cette dernière soit formée d'un unique matériau. Par exemple, l'épaulement 3 et le goulot 3 peuvent être formés en Polyéthylène, et le moyen anti retour d'air en matériau élastomère. Dans ce cas, la tête de tube 1 forme une unité monobloc constituée de deux matériaux distincts chimiquement, reliés par liaison chimique sans nécessiter d'assemblage ou de liaison mécanique.

Le moyen anti retour d'air 4 est alors typiquement réalisé par moulage injection.

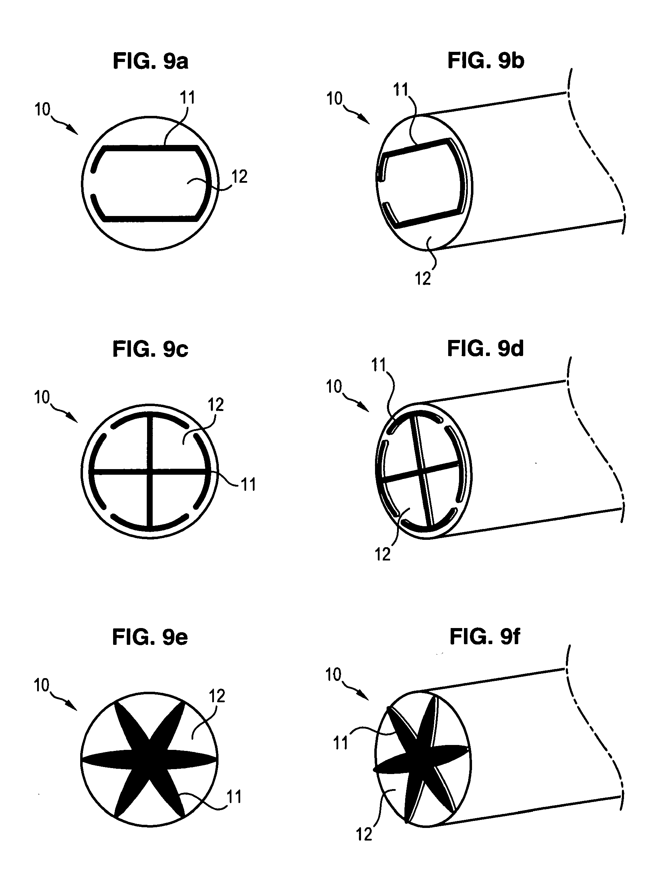

Les figures 9a à 9f présentent plusieurs exemples de poinçon utilisés pour la réalisation de la valve 4 de la tête de tube 1.

Les figures 9a et 9b illustrent deux vues d'un poinçon 10 utilisé pour former un moyen anti retour d'air 4 comprenant un clapet 41 unique et muni d'une charnière 43, correspondant par exemple au mode de réalisation illustré sur les figures 1 à 3.

Le poinçon 10 tel que représenté a une forme cylindrique, et est ainsi adapté pour être inséré et guidé en translation à l'intérieur du goulot 2. De manière avantageuse, le diamètre externe du poinçon 10 correspond au diamètre interne du goulot 2, de manière à assurer ce guidage en translation.

Le poinçon 10 comprend un élément de découpe 11 en relief disposé sur une surface supérieure 12 plane, permettant de définir le clapet 41 ou les parties de clapet 45.

Les figures 9c et 9d présentent deux vues du poinçon 10 permettant de réaliser un clapet 41 comprenant quatre parties de clapet 45, chacune de ces parties de clapet ayant une charnière 43 s'étendant sur une partie réduite de sa périphérie externe. De la même manière que sur les figures 9a et 9b, le poinçon 10 comprend ici une surface supérieure 12 plane sur laquelle est disposé un élément de découpe 11 en relief.

Les figures 9e et 9f présentent deux vues d'un poinçon 10 adapté pour réaliser un moyen anti retour d'air 41 comprenant six clapets 45. Dans ce mode de réalisation particulier, le poinçon a une surface supérieure 12 sensiblement conique, sur laquelle est disposé l'élément de découpe 11 en relief sur cette surface supérieure 12 conique.

Le poinçon 10 est avantageusement inséré dans la tête de tube via l'extrémité opposée au goulot 2, ce qui permet de faciliter la rotation ultérieure du clapet 41 ou des parties de clapet 45 vers l'ouverture 6 du goulot 2, en les orientant sensiblement en direction de l'ouverture 6 du goulot 2.

Le poinçon 10 illustré sur les figures 9e et 9f permet d'accentuer cet effet, en réalisant une déformation initiale du clapet 41 ou des parties de clapet 45 en direction de l'ouverture 6 du goulot 2.

La figure 10 illustre l'insertion d'un poinçon 10 similaire à celui présenté sur les figures 9e et 9f dans une tête de tube 1, afin de former les clapets 45 à partir d'une membrane obstruant le canal du goulot 2.

Celle figure illustre notamment le fait que la face supérieure 12 inclinée du poinçon 10 permet de former les clapets 45 dans une configuration similaire à leur position dans laquelle ils permettent un passage de produit dans le canal du goulot 2.

On observe en outre que le poinçon présenté sur ces figures 9e et 9f permet de réaliser des clapets 45 comprenant une charnière s'étendant sur tout sur côté arrondi, contrairement aux poinçons présentés sur les figures 9a à 9d dans lesquels les éléments de découpe définissent clairement une charnière de dimensions réduite.

La figure 11 illustre une autre variante de la tête de tube 1, dans laquelle le goulot 2 présente une structure comprenant deux parois 25 et 26.

Cette variante comprend plusieurs éléments communs avec les variantes présentées précédemment, qui ne seront pas détaillées à nouveau ici.

Dans cette variante, le goulot 2 présente une paroi externe 25 et une paroi interne 26, entre lesquelles est défini un espacement interne 27. La paroi externe 25 et la paroi interne 26 sont typiquement concentriques, centrées sur l'axe Z du goulot 2.

Dans le mode de réalisation représenté sur la figure 11, la tête de tube 1 est associée à un bouchon 8 de type flip-top. Le bouchon 8 tel que représenté comprend une base 81 qui est assemblée sur la première extrémité 21 du goulot, par exemple vissée, collée, soudée ou montée en force, une charnière 82 et un opercule 83, relié à la base 81 via la charnière 82. La base 81 du bouchon 8 et le goulot 2 de la tête de tube 1 comprennent alors des moyens d'encliquetage complémentaires. Dans ce mode de réalisation particulier, le goulot 2 ne comprend alors pas nécessairement de filetage 23 comme dans les modes de réalisation présentés sur les figures précédentes. On comprendra bien que cette structure de la tête de tube 1 comprenant une paroi externe 25 et une paroi interne 26 peut également être associée à un bouchon que l'on vient visser sur le goulot 2, qui comprend alors un filetage au niveau de la face extérieure de sa paroi externe 25.

La paroi externe 25 comprend le filetage 23 sur sa face externe, et a une face externe qui est typiquement cylindrique ou conique.

La paroi interne 26 est typiquement tubulaire ou conique, d'axe Z identique à l'axe du goulot 2, et est reliée à la paroi externe 25 via la première extrémité 21 du goulot 2.

La paroi interne 26 définit les dimensions de l'ouverture 6 du goulot ; typiquement son diamètre dans le cas d'une ouverture 6 cylindrique ou conique. Le moyen anti retour d'air 4 est relié à la paroi interne 26, et vient ainsi obstruer partiellement l'ouverture 6.

L'épaisseur de la paroi interne 25 est typiquement comprise entre 0,5 et 1mm ; par exemple égale à 0,75mm.

La hauteur de la paroi interne 25, qui correspond typiquement à la distance entre le moyen anti retour d'air 4 et l'ouverture 6 de la tête de tube 2, est typiquement comprise entre 5 et 10mm, par exemple égale à 9,2 mm.

Cette variante est notamment avantageuse en termes de fabrication.

L'invention permet ainsi de réaliser une tête de tube 1 comprenant des moyens anti retour d'air 4 formés dans le même matériau que la tête de tube 1, et permettant de préserver le produit contenu dans le tube associé à la tête de tube 1 sans nécessiter des étapes complexes et coûteuses de fabrication.

## Revendications

1. Tête de tube pour produit de consistance fluide à pâteuse comprenant
- un goulot présentant à une première extrémité une ouverture par laquelle le produit est extrait du tube,
- un épaulement relié à une seconde extrémité du goulot opposée à la première extrémité, et
la tête de tube comprenant un moyen anti-retour d'air disposé dans ledit goulot, ledit moyen étant adapté pour éviter un retour d'air de la première extrémité du goulot la seconde extrémité du goulot, **caractérisé en ce que** le tête de tube est monobloc et **en ce que** le moyen anti-retour comprend au moins un clapet.

2. Tête de tube selon la revendication 1, dans laquelle le clapet anti-retour est disposé au niveau de la seconde extrémité du goulot.

3. Tête de tube selon la revendication 1 ou 2, dans laquelle le clapet anti-retour est disposé à une position intermédiaire entre la première et la seconde extrémité du goulot, de sorte que pour un clapet ayant une dimension maximale D, la distance entre ledit clapet et la première extrémité du goulot soit supérieure ou égale à D.

4. Tête de tube selon l'une des revendications précédentes, dans laquelle le clapet est disposé dans un plan sensiblement perpendiculaire à l'axe du goulot.

5. Tête de tube selon l'une des revendications précédentes, comprenant une charnière reliant le clapet anti-retour à une face interne du goulot par la charnière de sorte que le clapet est mobile en rotation.

6. Tête de tube selon l'une des revendications précédentes, dans laquelle le goulot comprend une face interne de forme sensiblement cylindrique, présentant une lèvre à laquelle est relié ledit clapet anti-retour.

7. Tête de tube selon l'une des revendications précédentes, dans laquelle le moyen anti-retour est formé de plusieurs clapets, l'ensemble desdits clapets étant adapté pour obturer un canal du goulot.

8. Tête de tube selon la revendication précédente dans laquelle lesdits clapets sont identiques.

9. Tête de tube selon l'une des revendications précédentes, dans laquelle le goulot comprend une paroi interne et une paroi externe, lesdites parois étant concentriques et séparées l'une de l'autre par un logement interne, et reliées à la première extrémité du goulot., le moyen anti retour d'air étant relié à la paroi interne du goulot.

10. Tête de tube selon l'une des revendications précédentes, **caractérisée en ce qu'**elle est réalisée en au moins une matière plastique.

11. Tube pour produit de consistance fluide à pâteuse comprenant une tête de tube selon l'une des revendications précédentes.

12. Tube selon la revendication 11, comprenant une jupe réalisée en au moins un matériau plastique ou métallo plastique, tel que du polyéthylène ou polypropylène.

13. Tube selon l'une des revendications 11 ou 12, dans lequel la jupe présente au moins l'une des propriétés suivantes :
- une épaisseur comprise entre 150 et 250 µm ; plus précisément comprise entre 225 et 235 µm ; typiquement de l'ordre de 230 µm ;
- un diamètre compris entre 1 et 8 cm ; par exemple entre 2 et 5 cm ;
- une longueur comprise entre 5 et 20 cm, par exemple entre 8 et 16 cm, typiquement de l'ordre de 12 cm.

14. Procédé de fabrication d'une tête de tube, ledit procédé comprenant les étapes suivantes :
- une étape d'injection de la tête de tube, de manière à former un goulot présentant une ouverture à une première extrémité, un épaulement relié à une seconde extrémité du goulot opposée à la première extrémité, et une membrane disposée dans ledit goulot, de manière à l'obstruer, la tête de tube étant monolithique,
- une étape de poinçonnage de ladite membrane, de manière à découper ladite membrane afin de former au moins un moyen anti retour d'air disposé à l'intérieur du goulot.

15. Procédé selon la revendication précédente, dans laquelle l'étape de poinçonnage est réalisée par application d'un poinçon sur ladite membrane, de manière à former un clapet et une charnière reliant le clapet au goulot.

16. procédé selon l'une des revendications 13 ou 14, dans lequel le goulot et l'épaulement sont réalisé dans une première matière plastique, le moyen anti retour d'air étant formé par moulage injection dans une seconde matière plastique distincte de la première matière plastique.
